# EUROPÄISCHE PATENTANMELDUNG

(11) **EP 1 791 241 A1**
(43) Veröffentlichungstag der Anmeldung: **30.05.2007**
(21) Anmeldenummer: 05025685.8
(22) Anmeldetag: 24.11.2005
(51) Int. Cl.: H02K 3/50, H02K 3/12

(54) **Anordnung mit Generatorstäben für einen Ständer eines elektrischen Generators**

(71) Anmelder: SIEMENS AKTIENGESELLSCHAFT, 80333 München (DE)
(72) Erfinder: Kowalski, Waldemar, 45472 Mülheim an der Ruhr (DE); Lehmann, Christoph, Dr., 47506 Neukirchen-Vluyn (DE); Richter, Claus-Georg, 45468 Mülheim an der Ruhr (DE); Spiess, Karlheinz, 47445 Moers (DE)

(57) **Zusammenfassung**

Eine Anordnung mit mindestens zwei Generatorstäben (12) für einen Ständer eines elektrischen Generators, die über ein jeweiliges Stabende (16) elektrisch miteinander in Verbindung stehen, ist erfindungsgemäß dadurch gekennzeichnet, dass die jeweiligen elektrisch miteinander in Verbindung stehenden Stabenden (16) der mindestens zwei Generatorstäbe (12) mittels eines Bandes (18) gegeneinander verspannt sind.

## Beschreibung

Die Erfindung betrifft eine Anordnung mit mindestens zwei Generatorstäben für einen Ständer eines elektrischen Generators, die über ein jeweiliges Stabende elektrisch miteinander in Verbindung stehen. Die Erfindung betrifft ferner einen Ständerwickelkopf mit einer derartigen Anordnung. Darüber hinaus betrifft die Erfindung einen elektrischen Generator mit einem derartigen Ständerwickelkopf.

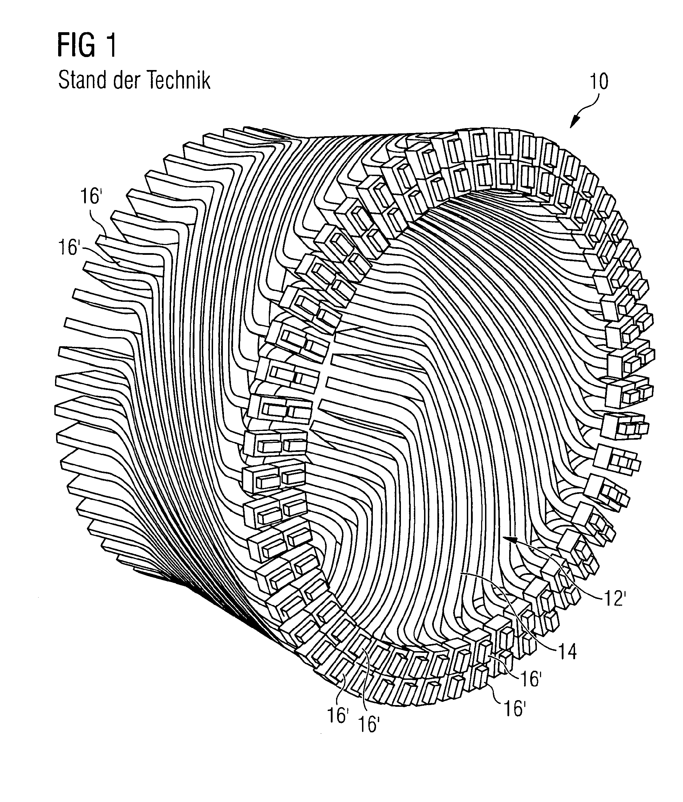

Ein aus dem Stand der Technik bekannter Ständerwickelkopf 10 für einen elektrischen Generator ist in Fig. 1 schematisch dargestellt. Ein elektrischer Generator besteht im Wesentlichen aus zwei Teilen, einem Ständer oder Stator als feststehendem Teil und einem innerhalb des Ständers angeordneten Rotor oder Läufer. Ein Ständerwickelkopf 10 des Ständers besteht aus einer Vielzahl von Generatorstäben 12', die elektrisch miteinander verschaltet sind. Jeder der Generatorstäbe 12' weist dabei jeweilige Stabenden 16', sowie eine dazwischen verlaufende Evolvente 14 auf. Die jeweiligen Generatorstäbe 12' weisen eine Vielzahl von Teilleitern auf, die miteinander verdrillt sind.

Bei der Herstellung eines Ständerwickelkopfs 10 werden im Stand der Technik eine Vielzahl von Generatorstäben 12' in entsprechende Nuten eines Blechpakets des Ständers eingelegt. Daraufhin werden die Stabenden 16' von jeweils zwei Generatorstäben 12' mit in entgegengesetzten Richtungen verschwenkten Evolventen mechanisch aufeinander ausgerichtet. Das heißt, die Stabenden 16' werden mit entsprechenden Werkzeugen in geeignete Stellungen gebogen. Daraufhin werden die jeweils aufeinander ausgerichteten Stabenden 16' mechanisch verbunden. Diese mechanische Verbindung wird gemäß dem Stand der Technik beispielsweise durch Verlöten oder durch Verschrauben mittels entsprechenden Verschraubungselementen bewerkstelligt.

Eine der Erfindung zugrunde liegende Aufgabe besteht darin, einen elektrischen Generator der eingangs genannten Art dahingehend zu verbessern, dass die Herstellung des Ständerwickelkopfes unaufwendiger und damit kostengünstiger erfolgen kann.

Diese Aufgabe ist erfindungsgemäß mit einer gattungsgemäßen Anordnung gelöst, bei welcher die jeweiligen elektrisch miteinander in Verbindung stehenden Stabenden mit den mindestens zwei Generatorstäben mittels eines Bandes gegeneinander verspannt sind. Die Aufgabe ist ferner mit einem Ständerwickelkopf gelöst, welcher mit einer derartigen erfindungsgemäßen Anordnung versehen ist. Darüber hinaus ist die Aufgabe mit einem gattungsgemäßen elektrischen Generator gelöst, welcher einen derartigen erfindungsgemäßen Ständerwickelkopf aufweist.

Durch das erfindungsgemäße Verspannen der jeweiligen elektrisch miteinander in Verbindung stehenden Stabenden der mindestens zwei Generatorstäbe mittels eines Bandes entfällt ein aufwendiges manuelles Ausrichten der Stabenden vor Herstellung des elektrischen Kontaktes. Erfindungsgemäß erfolgt die genaue Ausrichtung der Stabenden zueinander durch das Verspannen mittels des Bandes. Diese Maßnahme verringert den Montageaufwand erheblich und verhindert auch die Gefahr einer mechanischen Überbeanspruchung der Stabenden durch nachträgliches Ausrichten.

In bevorzugter Ausführungsform umschließt das Band die gegeneinander verspannten Stabenden vollständig. Das heißt, das Band ist von außen her um die zu verbindenden Stabenden herumgewickelt. Gemäß dieser Ausführungsform lassen sich die entsprechenden Stabenden besonders gut mittels des Bandes gegeneinander verspannen.

Um die Stabenden besonders stabil und verlässlich miteinander verbinden zu können, ist es zweckmäßig, wenn die Anordnung ein zwischen den gegeneinander verspannten Stabenden angeordnetes Spannelement zum Verspannen der Stabenden im Band aufweist. Mittels eines derartigen Spannelements können die Stabenden beim Verspannen genau aufeinander ausgerichtet werden. Dabei presst vorteilhafterweise das Spannelement die beiden Stabenden gegen die Wirkung des diese umschließenden Bandes auseinander und richtet so die Stabenden in geeigneter Weise aufeinander aus.

In vorteilhafter Ausführungsform ist das Spannelement keilförmig ausgebildet und weiterhin weist die Anordnung insbesondere eine Spannschraube, mittels der das Spannelement gegenüber den Stabenden zum Verspannen der Stabenden im Band verschiebbar ist, auf. Durch die keilförmige Ausbildung des Spannelements lassen sich die Stabenden durch einfaches Verschieben des Spannelements auf einfache Weise in das Band einspannen. Die derart gegeneinander verspannten Stabenden sind in diesem Zustand zur Herstellung einer elektrischen Verbindung ausreichend aufeinander ausgerichtet. Durch das Vorsehen einer Spannschraube zum Verschieben des Spannelements gegenüber den Stabenden lässt sich der Montagevorgang der Stabenden durch Verspannen mittels des keilförmigen Spannelements besonders einfach und damit zeitsparend ausführen.

Weiterhin ist es zweckmäßig, wenn das Spannelement elektrisch leitend ist. In diesem Fall kann die elektrisch leitende Verbindung zwischen den jeweiligen Generatorstabenden durch das Spannelement selbst hergestellt werden.

In vorteilhafter Ausführungsform sind die gegeneinander verspannten Stabenden jeweils zylinderförmig gestaltet. Diese Maßnahme erleichtert das Anbringen des Bandes an den Stabenden und weiterhin das Verspannen der Stabenden innerhalb des Bandes.

Vorteilhafterweise sind die gegeneinander verspannten Stabenden jeweils mit einer zumindest abschnittsweise abgerundeten, insbesondere zumindest abschnittsweise kreisförmigen Zylinderfläche gestaltet. Eine derartige zumindest teilweise kreiszylinderförmige Gestaltung der Stabenden erleichtert das Anbringen des Bandes und das darin Verspannen der Stabenden weiter.

In vorteilhafter Ausführungsform sind die gegeneinander verspannten Stabenden jeweils mit einer abgeflachten Anlagefläche zur Anlage eines Spannelements gestaltet. Damit ergibt sich eine besonders stabile Anlagefläche für das Spannelement an den Stabenden, wodurch der Montagevorgang zum Verbinden der Stabenden weiter erleichtert wird.

Nachfolgend ist ein Ausführungsbeispiel einer erfindungsgemäßen Anordnung mit mindestens zwei Generatorstäben für einen Ständer eines elektrischen Generators anhand der beigefügten schematischen Zeichnungen näher erläutert. Es zeigt:
- Fig. 1: eine perspektivische Ansicht eines aus dem Stand der Technik bekannten Ständerwickelkopfes für einen elektrischen Generator, sowie
- Fig. 2: eine perspektivische Ansicht einer Verbindung zweier Generatorstabenden gemäß einer Ausführungsform der Erfindung.

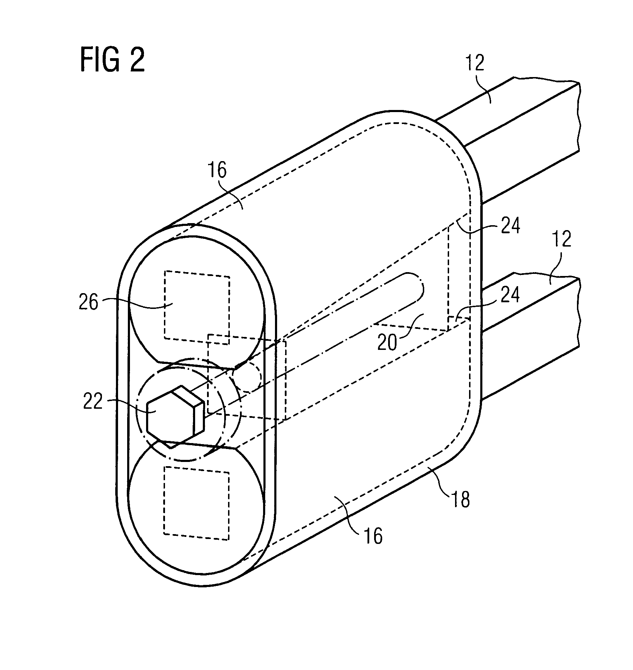

Fig. 2 zeigt eine erfindungsgemäße Ausführungsform einer Verbindung zweier Stabenden 16 jeweiliger Generatorstäbe 12 eines Ständerwickelkopfes 10 eines elektrischen Generators. An die dargestellten Stabenden 16 zweier Generatorstäbe 12 schließen sich in der Fig. 2 nicht dargestellte, in entgegengesetzte Richtungen laufende Evolventen 14 der jeweiligen Generatorstäbe 12 an. Diese Evolventen 14 sind in entsprechenden Nuten eines ebenfalls nicht dargestellten Blechpaketes des Ständerwickelkopfes 10 eingebettet. Die beiden dargestellten Stabenden 16 ragen aus dem Blechpaket heraus und sind von einem Band 18 umspannt.

Bei der Montage des Ständerwickelkopfes 10 wird das ringförmige Band über die Stabenden 16 gestülpt und daraufhin ein keilförmiges Spannelement 20 mittels einer Spannschraube 22 parallel zur Längsachse der Stabenden 16 verschoben. Durch die Verschiebung des Spannelements 20 werden die Stabenden 16 der Generatorstäbe 12 auseinander gepresst und dadurch in das Band 18 eingespannt. Die Stabenden 16 sind damit mittels des Bandes 18 gegeneinander verspannt. Das Spannelement 20 ist elektrisch leitend ausgeführt und stellt damit eine elektrische Verbindung zwischen den beiden Stabenden 16 der Generatorstäbe 12 her.

Die jeweiligen Stabenden 16 der beiden zugehörigen Generatorstäbe 12 weisen jeweils an den aneinander zugewandten Seiten eine abgeflachte Anlagefläche 24 zur Anlage des Spannelements 20 auf. Die zylinderförmig gestalteten Stabenden 16 sind damit mit einer an einer Stelle abgeflachten kreisförmigen Stirnfläche 26 gestaltet. Damit ergibt sich eine große Anlagefläche zwischen den Stabenden 16 und dem Spannelement, wodurch das Auseinanderpressen der Stabenden 16 beim Verspannen innerhalb des Bandes 18 erleichtert wird.

Durch die Verbindung der beiden Stabenden 16 der zugehörigen Generatorstäbe 12 gemäß der vorliegenden erfindungsgemäßen Ausführungsform entfällt ein mühsames Ausrichten der Stabenden 16 nach Einlegen der Generatorstäbe 12 in das Blechpaket. Eine wie im Stand der Technik durch ein nachträgliches Richten verursachte Gefahr der mechanischen Überbeanspruchung der Stabenden 16 wird damit vermieden.

Weiterhin ergibt sich bei einer Stabmontage gemäß der erfindungsgemäßen Ausführungsform gegenüber herkömmlichen Montageverfahren eine erhebliche Zeitersparnis.

## Patentansprüche

1. Anordnung mit mindestens zwei Generatorstäben (12) für einen Ständer eines elektrischen Generators, die über ein jeweiliges Stabende (16) elektrisch miteinander in Verbindung stehen,
**dadurch gekennzeichnet, dass**
die jeweiligen elektrisch miteinander in Verbindung stehenden Stabenden (16) der mindestens zwei Generatorstäbe (12) mittels eines Bandes (18) gegeneinander verspannt sind.

2. Anordnung nach Anspruch 1,
**dadurch gekennzeichnet, dass**
das Band (18) die gegeneinander verspannten Stabenden (16) vollständig umschließt.

3. Anordnung nach Anspruch 1 oder 2,
**gekennzeichnet durch**
ein zwischen den gegeneinander verspannten Stabenden (16) angeordnetes Spannelement (20) zum Verspannen der Stabenden (16) im Band (18).

4. Anordnung nach Anspruch 3,
**dadurch gekennzeichnet, dass**
das Spannelement (20) keilförmig ausgebildet ist und die Anordnung insbesondere eine Spannschraube (22) aufweist, mittels der das Spannelement (20) gegenüber den Stabenden (16) zum Verspannen der Stabenden (16) im Band (18) verschiebbar ist.

5. Anordnung nach Anspruch 3 oder 4,
**dadurch gekennzeichnet, dass**
das Spannelement (20) elektrisch leitend ist.

6. Anordnung nach einem der vorausgehenden Ansprüche,
**dadurch gekennzeichnet, dass**
die gegeneinander verspannten Stabenden (16) jeweils zylinderförmig gestaltet sind.

7. Anordnung nach Anspruch 6,
**dadurch gekennzeichnet, dass**
die gegeneinander verspannten Stabenden (16) jeweils mit einer zumindest abschnittsweise abgerundeten, insbesondere zumindest abschnittsweise kreisförmigen Zylinderfläche (26) gestaltet sind.

8. Anordnung nach Anspruch 6 oder 7,
**dadurch gekennzeichnet, dass**
die gegeneinander verspannten Stabenden (16) jeweils mit einer abgeflachten Anlagefläche (24) zur Anlage eines Spannelements (20) gestaltet sind.

9. Ständerwickelkopf für einen elektrischen Generator mit einer Anordnung nach einem der vorausgehenden Ansprüche.

10. Elektrischer Generator mit einem Ständerwickelkopf nach Anspruch 9.
